# FASCICULE DE BREVET EUROPEEN

(11) **EP 2 826 133 B1**
(45) Date de publication et mention de la délivrance du brevet: **26.05.2021**
(21) Numéro de dépôt: 13736604.3
(22) Date de dépôt: 15.03.2013
(51) Int. Cl.: H02K 1/24, H02K 3/51, H02K 9/06, H02K 21/04

(54) **ENSEMBLE DE FLASQUES COMPORTANT DES PALES AXIALES GENERANT UN FLUX D'AIR AXIAL A TRAVERS D'UN ROTOR**
ANORDNUNG VON ENDKAPPEN, DIE LÜFTERSCHAUFELN ZUR ERZEUGUNG EINER AXIALEN LUFTSTRÖMUNG IN EINEM ROTOR UMFASSEN
ASSEMBLY OF END SHIELDS COMPRISING BLADES ABLE TO GENERATE AN AXIAL AIR FLOW THROUGH A ROTOR

(30) Priorité: 16.03.2012 FR 1252385
(43) Date de publication de la demande: 21.01.2015
(73) Titulaire: Valeo Equipements Electriques Moteur, 94046 Créteil Cedex (FR)
(72) Inventeur: FAKES, Michel, F-59113 Seclin (FR); LUTUN, Jérémie, 94340 Joinville Le Pont (FR); BOUSSICOT, Frédéric, F-94000 Créteil (FR)
(74) Mandataire: Novembre, Christophe Adelphe
(86) Numéro de dépôt international: PCT/FR2013/050538
(87) Numéro de publication internationale: WO 2013/136021

(56) Documents cités:
- EP-A2- 0 444 908
- EP-A2- 1 443 627
- DE-A1-102008 059 171
- JP-A- 2005 160 140
- JP-U- 57 007 872
- US-A1- 2009 167 120

## Description

### DOMAINE TECHNIQUE DE L'INVENTION

L'invention concerne un ensemble de flasques de rotor de machine électrique tournante comportant des pales axiales de ventilation favorisant un flux d'air axial à l'intérieur du rotor ainsi qu'un rotor de machine électrique associé.

L'invention trouve une application particulièrement avantageuse dans le domaine des machines électriques tournantes telles que les alternateurs, les alterno-démarreurs et les ralentisseurs électromagnétiques.

### ETAT DE LA TECHNIQUE

Le document WO 2007/003835 présente un rotor à pôles saillants pour une machine électrique tournante notamment un alternateur ou un alterno-démarreur pour véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile.

Cette machine comporte essentiellement un carter et, à l'intérieur de celui-ci, un rotor solidaire en rotation d'un arbre central de rotor et un stator annulaire qui entoure le rotor de manière coaxiale à l'arbre.

Le stator comporte un corps en forme d'un paquet de tôles doté d'encoches, par exemple du type semi-fermé, pour le montage d'un bobinage de stator comportant plusieurs enroulements. Ce bobinage de stator comporte par exemple un jeu d'enroulements triphasé en étoile ou en triangle, dont les sorties sont reliées à un pont redresseur comportant des éléments redresseurs.

D'une manière générale, l'alternateur est du type polyphasé et le ou les ponts redresseurs permettent notamment de redresser le courant alternatif produit dans les enroulements du stator en un courant continu notamment pour charger la batterie du véhicule automobile et alimenter les charges et les consommateurs électriques du réseau de bord du véhicule automobile.

Le carter est en au moins deux parties, à savoir un palier avant et un palier arrière. Les paliers sont de forme creuse et portent chacun centralement un roulement à billes respectivement pour le montage à rotation de l'arbre du rotor.

Le carter comporte une partie intermédiaire portant intérieurement le corps du stator. Cette partie intermédiaire est intercalée axialement entre les paliers dotés chacun d'une pluralité d'ouvertures pour ventilation interne de la machine grâce à au moins un ventilateur solidaire d'une des extrémités axiale du rotor. Ce ventilateur comporte des pales solidaires d'un flasque de manière décrite ci-dessous.

L'arbre du rotor porte à son extrémité avant une poulie qui est agencée à l'extérieur du carter. La poulie appartient à un dispositif de transmission de mouvements par l'intermédiaire d'au moins une courroie entre l'alternateur et le moteur thermique du véhicule automobile.

Un paquet de tôles est monté coaxialement sur l'arbre de rotor dans le carter, à l'intérieur du stator. Ce paquet de tôles est formé d'un empilement axial de tôles qui s'étendent dans un plan radial perpendiculaire à l'axe de l'arbre de rotor. Ce paquet de tôles comporte ici, une âme centrale cylindrique et une répartition circonférentielle de bras saillants radialement à partir de l'âme.

Dans un plan radial, les tôles du paquet de tôles ont toutes un contour identique. Le contour des tôles est découpé de forme globalement circulaire et comportant des pôles saillants, qui sont répartis régulièrement selon une direction radiale et saillants de l'arbre vers la périphérie externe. Le paquet de tôles comporte au moins deux pôles.

Chaque pôle est constitué d'un bras qui, à partir de l'âme, s'étend radialement vers la périphérie extérieure en direction du stator. L'extrémité libre du pôle se termine par un retour saillant circonférentiellement de part et d'autre du bras. Un entrefer annulaire existe entre l'extrémité libre des pôles et la périphérie intérieure du corps du stator.

La fonction du retour saillant de chaque pôle est de retenir dans la direction radiale un bobinage d'excitation électriquement conducteur, qui est enroulé autour du bras radial de chaque pôle, à l'encontre de la force centrifuge subie par le bobinage d'excitation lors de la rotation du rotor.

Les bobinages d'excitation de chaque pôle sont reliés électriquement entre eux par des fils de liaison, par exemple en série. Les bobinages d'excitation sont alimentés électriquement par un collecteur, qui comporte des bagues collectrices, qui sont agencées autour d'une extrémité arrière de l'arbre. Ce collecteur est par exemple réalisé par surmoulage de matière électriquement isolante sur des éléments électriquement conducteurs reliant les bagues à un anneau relié électriquement par des liaisons filaires aux extrémités du ou des bobinages d'excitation du rotor.

Les bagues collectrices sont alimentées électriquement par l'intermédiaire de balais qui appartiennent à un porte-balais et qui sont disposés de façon à frotter sur les bagues collectrices. Le porte-balais est généralement agencé dans le carter et il est relié électriquement à un régulateur de tension.

Le rotor peut comporter en outre des aimants. Les aimants s'étendent axialement au voisinage de la périphérie externe du rotor. Ainsi les aimants sont agencés régulièrement autour de l'arbre en alternance avec les pôles. A cet effet, chaque aimant est positionné entre deux pôles saillants adjacents, les extrémités libres des deux pôles saillants étant munies d'encoches maintenant l'aimant de manière immobile entre les deux pôles.

Chaque bobinage d'excitation est enroulé autour du bras d'orientation radiale de chaque pôle de manière que des portions d'extrémités axiales du bobinage d'excitation font saillie axialement par rapport à chaque face radiale d'extrémité axiale externe du paquet de tôles. Ces portions en saillie seront par la suite appelées "chignons". Chaque pôle comporte ainsi un bobinage d'excitation qui comporte lui-même deux chignons opposés.

Un premier flasque avant et un deuxième flasque arrière sont montés coaxialement à l'arbre de manière à enserrer axialement le paquet de tôles pour maintenir les tôles empilées en paquet. Chaque flasque a globalement la forme d'un disque s'étendant dans un plan radial perpendiculaire à l'axe de l'arbre. Chaque flasque comporte un orifice central pour le montage coaxial sur l'arbre.

Les flasques sont en matériau amagnétique et sont agencés axialement de part et d'autre du paquet de tôles de manière que les faces radiales internes des flasques sont en appui contre les faces radiales d'extrémité axiales externes du paquet de tôles. Chaque flasque comporte quatre trous destinés à permettre le passage de quatre tirants. Les bras du paquet de tôles comportent des trous de manière que les tirants puissent traverser axialement le paquet de tôles depuis le flasque avant jusqu'au flasque arrière. Les flasques sont en matière conductrice de chaleur, par exemple en métal.

Le bord périphérique externe des flasques en vis-à-vis du stator comporte des rainures axiales qui sont débouchantes dans les faces radiales interne et externe des flasques. Ces rainures permettent de renouveler l'air qui est compris radialement entre le stator et le rotor. L'un des flasques comporte des orifices de remplissage qui débouchent chacun dans le fond d'un logement associé. Ces orifices de remplissage sont destinés à permettre l'imprégnation du vernis liquide autour du bobinage d'excitation associé audit logement, et plus particulièrement autour des deux chignons du bobinage d'excitation.

La face radiale externe de chaque flasque comporte des pales formant un ventilateur. Chaque pale s'étend axialement vers l'extérieur depuis la face radiale externe du flasque associé. Lorsque le rotor tourne, les pales permettent ainsi d'évacuer la chaleur emmagasinée notamment dans les flasques et le rotor par circulation d'air à l'intérieur de la machine par l'intermédiaire des ouvertures que présentent les paliers.

Cependant, pour une telle configuration de la machine et en particulier des pales des flasques, la circulation de l'air à l'intérieur du rotor n'est pas optimale lorsque le nombre de pôles augmente. Lorsque le rotor présente un nombre de pôles élevés, ce rotor a tendance à s'échauffer rapidement.

En effet, les pales engendrent très peu de flux d'air axial entre les pôles du paquet de tôles. Ces pales engendrent un flux d'air essentiellement centrifuge c'est à dire un flux d'air suivant une direction axiale puis une direction radiale ou inversement. La chaleur contenue entre les pôles du paquet de tôles est ainsi difficile à évacuer axialement, ce qui provoque un réchauffement de la machine.

Les documents EP 0 444 908 A, JP 2005 160140 A, JP 57 007872 U, US 2009/167120 A, DE 10 2008 059171 A et EP 1 443 627 A chaque décrit un ensemble de flasques comprenant la possibilité d'appui sur le corps du rotor et de créer un flux d'air en travers dudit corps.

### OBJET DE L'INVENTION

L'invention a notamment pour but de proposer un ensemble de flasques de maintien amélioré d'un rotor de machine électrique tournante muni de pales axiales de ventilation favorisant un flux d'air axial à l'intérieur du rotor.

A cette fin, l'invention concerne un ensemble de flasques de maintien d'un paquet de tôles et de chignons de bobinages agencés axialement de part et d'autre du paquet de tôles d'un rotor de machine électrique tournante pour enserrer axialement le paquet de tôles, chaque flasque de maintien comportant une paroi radiale munie d'une ouverture principale autorisant le passage d'un arbre du rotor, chaque flasque comporte un rebord annulaire s'étendant à la périphérie externe de la paroi radiale et s'étendant axialement en direction du rotor, ce rebord annulaire présentant une face en appui sur la face d'extrémité radiale externe concernée du paquet de tôles et au moins un flasque de maintien comporte en outre au moins une pale axiale de ventilation associée à un orifice traversant ménagé dans la paroi radiale, cette pale axiale de ventilation étant destinée à assurer une circulation axiale du flux d'air dans le rotor, et étant positionnée en regard d'un espace délimité pas deux bobinages consécutifs.

Selon une réalisation, la pale axiale de ventilation s'étend suivant un plan incliné par rapport à la paroi radiale du flasque.

Selon une réalisation, la pale axiale de ventilation présente un angle compris entre 10 degrés et 45 degrés par rapport à la paroi radiale du flasque.

Selon une réalisation, la pale axiale de ventilation s'étend de part et d'autre de l'orifice traversant.

Selon une réalisation, la pale axiale de ventilation est positionnée au dessus d'un espace entre deux pôles.

Selon une réalisation,
- la pale axiale de ventilation comporte deux faces opposées ayant les plus grandes surfaces, reliées entre elles par quatre bords latéraux,
- l'orifice traversant est délimité par quatre bords,
une portion d'au moins un bord latéral de la pale axiale de ventilation étant reliée à un bord de l'orifice traversant.

Selon une réalisation,
- l'orifice traversant est délimité par deux bords arrondis opposés et deux bords de liaison reliant les bords arrondis,
une portion d'au moins un bord latéral de la pale axiale de ventilation étant reliée à un bord arrondi de l'orifice traversant.

Selon une réalisation, une portion de chaque bord latéral de la pale axiale de ventilation s'étendant dans le sens du flux axial est reliée à un bord arrondi de l'orifice traversant.

Selon une réalisation, la hauteur de la pale axiale de ventilation est globalement égale à la hauteur de l'orifice traversant.

Selon une réalisation, deux pales axiales de ventilation sont associées à l'orifice traversant.

Selon une réalisation, chaque flasque comporte une première série d'orifices situés autour de l'ouverture principale, ces orifices présentant un angle d'ouverture au moins égal à l'angle entre deux pôles saillants successifs.

Selon une réalisation, la première série d'orifices de chaque flasque comporte quatre orifices et chaque flasque comporte huit pales axiales de ventilation, deux pales axiales de ventilation étant positionnées en travers de chaque orifice traversant.

Selon une réalisation l'un au moins des flasques porte des pales centrifuges de ventilation assurant une circulation de l'air suivant au moins une direction radiale.

Selon une réalisation, l'un au moins des flasques porte des pales centrifuges de ventilation assurant une circulation de l'air suivant une direction radiale.

Selon une réalisation, l'un au moins des flasques porte des pales centrifuges de ventilation inclinées par rapport à la face radiale du flasque pour assurer une circulation de l'air suivant une direction axiale et une direction radiale ou inversement.

Selon une réalisation, les pales centrifuges de ventilation appartiennent à un ventilateur séparé rapporté à fixation sur le flasque par exemple par soudage par points, vissage ou rivetage.

Selon une réalisation, les pales centrifuges de ventilation appartiennent au flasque en étant d'un seul tenant avec ce flasque.

Selon une réalisation, au moins une pale centrifuge de ventilation s'étend au moins en partie sur l'orifice traversant en vue de dessus.

Selon une réalisation, chaque flasque présente une deuxième série d'orifices à l'extérieur de la première série d'orifices.

Selon une réalisation, chaque orifice de la deuxième série est positionné entre deux pales centrifuges successives.

Selon une réalisation les rebords des flasques de maintien sont configurés afin de maintenir en place les chignons des bobinages malgré la force centrifuge provoquée par la rotation du rotor s'exerçant sur lesdits chignons.

L'invention peut être utilisé dans un rotor de machine électrique tournante comportant :
- un arbre de rotor destiné à être monté rotatif autour de son axe,
- un paquet de tôles monté coaxialement sur l'arbre de rotor, ce paquet de tôles comportant au moins deux pôles saillants radialement,
- un bobinage d'excitation enroulé autour de chaque pôle, de manière que des portions d'extrémité axiale du bobinage, dites « chignons » font saillie axialement par rapport à chaque face d'extrémité radiale externe du paquet de tôles,
- un ensemble des flasques de maintien du paquet de tôles tel que décrit ci-dessus.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une vue en coupe axiale d'une machine électrique tournante munie d'un rotor ;
Figure 2 : une vue en perspective éclatée d'un rotor qui n'est pas bobiné ;
Figures 3a et 3b : des vues en perspective d'un rotor bobiné sans les flasques ni le résolveur ;
Figures 4a et 4b : des vues respectivement du dessus et du dessous d'un rotor sans les flasques ni le résolveur ;
Figures 5a-5b : des vues en perspective d'un rotor bobiné muni de ses flasques de maintien ;
Figures 6a-6b : des vues respectivement du dessus et du dessous d'un rotor muni de ses flasques de maintien ;
Figure 7 : une vue en coupe d'un rotor présentant une variante d'ouverture pour sa fixation sur l'arbre ;
Figure 8 : une vue en perspective d'un flasque de l'ensemble de flasque selon l'invention ;
Figure 9 : une vue en coupe longitudinale d'une partie d'un flasque de l'ensemble de flasque selon l'invention.

Les éléments identiques, similaires ou analogues conservent la même référence d'une figure à l'autre.

### DESCRIPTION D'EXEMPLES DE REALISATION DE L'INVENTION

L'exemple utilise un rotor 30 à pôles saillants pour une machine 10 électrique tournante notamment un alternateur ou un alterno-démarreur. Cette machine 10 est de préférence destinée à être mise en œuvre dans un véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile. Un tel alterno-démarreur est décrit par exemple dans le document WO-A-01/69762 auquel on se reportera pour plus de précisions.

Cette machine comporte essentiellement un carter 11 et, à l'intérieur de celui-ci, un rotor 30 solidaire en rotation d'un arbre 35 central de rotor et un stator 12 annulaire qui entoure le rotor 30 de manière coaxiale à l'arbre 35 d'axe B constituant également l'axe du rotor 30.

Le stator 12 comporte un corps en forme d'un paquet de tôles doté d'encoches, par exemple du type semi-fermé, pour le montage d'un bobinage de stator 13 comportant plusieurs enroulements. Ce bobinage de stator 13 comporte par exemple un jeu d'enroulements triphasé en étoile ou en triangle, dont les sorties sont reliées à un pont redresseur (non représenté) comportant des éléments redresseurs comportant des éléments redresseurs tels que des diodes ou des transistors du type MOSFET, notamment lorsque la machine 10 est du type réversible et consiste en un alterno-démarreur comme décrit par exemple dans le document FR-A-2.745.445 (US-A-6.002.219).

Les enroulements du bobinage de stator 13 sont obtenus à l'aide d'un fil continu, électriquement conducteur, revêtu d'une couche isolante et monté dans les encoches concernées du corps du stator 12.

Selon une variante non représentée, pour un meilleur remplissage des encoches du corps du stator 12, les enroulements 13 sont réalisés à l'aide de conducteurs en forme de barres, tel que des épingles, reliées entre elles par exemple par soudage.

Selon une autre variante non représentée, pour réduire le taux d'ondulation et les bruits magnétiques, le bobinage de stator 13 comporte deux jeux d'enroulements triphasés pour former un dispositif d'enroulements composites de stator 12, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

D'une manière générale, l'alternateur est du type polyphasé et le pont redresseur permet notamment de redresser le courant alternatif produit dans les enroulements du stator 12 en un courant continu notamment pour charger la batterie (non représentée) du véhicule automobile et alimenter les charges et les consommateurs électriques du réseau de bord du véhicule automobile.

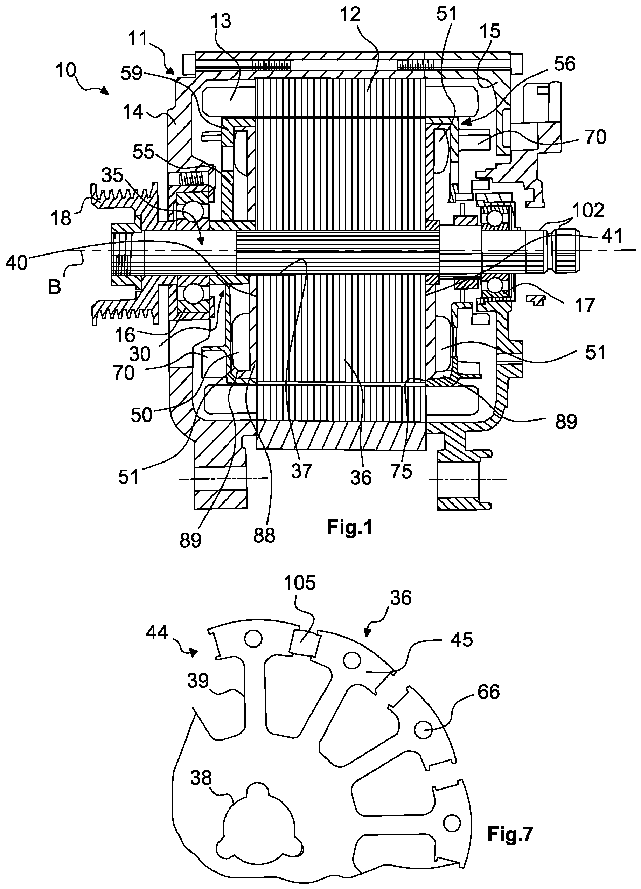

Comme illustré à la Figure 1, l'arbre 35 du rotor 30 est monté à rotation autour de son axe B d'orientation axiale dans le stator 12 de la machine 10.

Le carter 11 est en au moins deux parties, à savoir un palier 14 avant et un palier 15 arrière. Les paliers 14, 15, en aluminium dans ce mode de réalisation, sont de forme creuse et portent chacun centralement un roulement à billes respectivement 16 et 17 pour le montage à rotation de l'arbre 35 du rotor 30.

Le carter 11 comporte une partie intermédiaire (non référencée) portant intérieurement le corps du stator. Cette partie intermédiaire est intercalée axialement entre les paliers 14, 15 dotés chacun d'une pluralité d'ouvertures d'entrée et de sorties d'air comme décrit dans le document WO 2007/003835 pour ventilation interne de la machine à l'aide d'un ventilateur du type centrifuge décrit plus en détails ci-après.

L'arbre 35 du rotor 30 porte à son extrémité avant une poulie 18 qui est agencée à l'extérieur du carter 11. La poulie 18 appartient à un dispositif de transmission de mouvements par l'intermédiaire d'au moins une courroie (non représentée) entre l'alternateur et le moteur thermique du véhicule automobile.

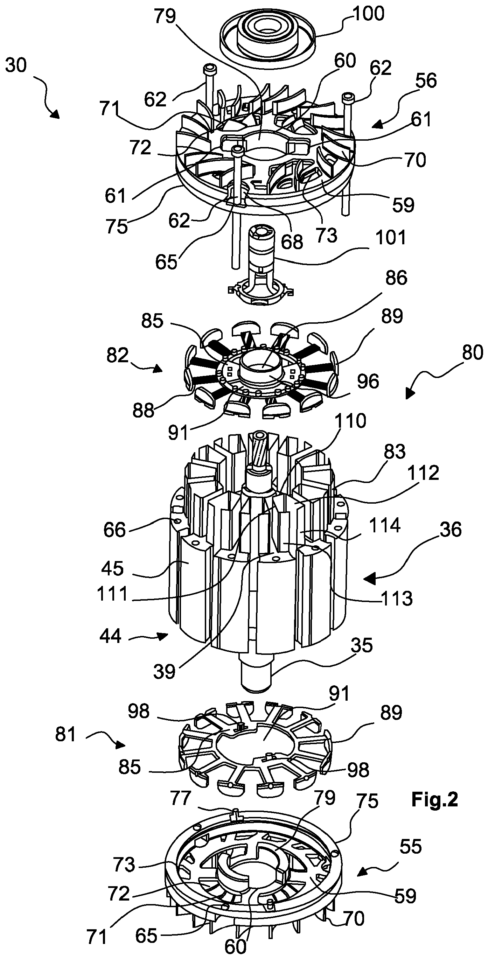

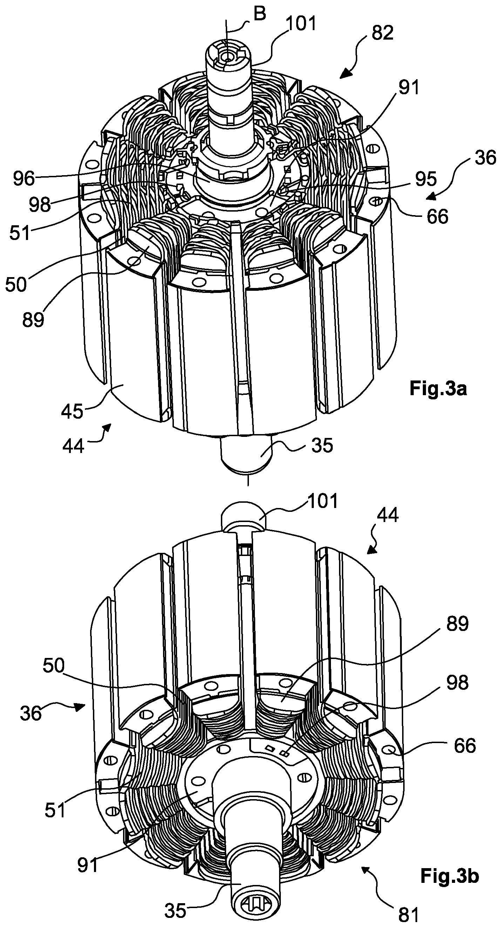

La Figure 2 montre le rotor 30 comportant l'arbre 35, un paquet 36 de tôles monté coaxialement sur l'arbre 35, ce paquet 36 de tôles comportant au moins deux pôles 44 saillants radialement. Le rotor 30 comporte en outre un bobinage 50 d'excitation (cf. Figures 3a-3b) enroulé autour de chaque pôle 44, de manière que des portions 51 d'extrémité axiale du bobinage 50, dîtes « chignons » font saillie axialement par rapport à chaque face 40, 41 d'extrémité radiale externe du paquet 36 de tôles. Des flasques 55, 56 de maintien du paquet 36 de tôles et des chignons 51 des bobinages 50 sont agencés axialement de part et d'autre du paquet 36 de tôles.

Plus précisément, le paquet 36 de tôles est monté coaxialement sur l'arbre 35 de rotor 30 dans le carter 11, à l'intérieur du stator 12. Le paquet 36 de tôles est monté solidaire en rotation de l'arbre 35. A cet effet, le paquet 36 de tôles comporte un orifice 37 axial central qui est emmanché à force sur un tronçon moleté de l'arbre 35. En variante, l'âme 43 du paquet 36 de tôles présente une ouverture 38 munie d'évidements (Non référencés) répartis de manière régulière circonférentiellement autour de l'ouverture 38 pour formation de languettes (Non référencées) destinées à coopérer avec le tronçon moleté de l'arbre 35 (cf. Figure 7). Dans un exemple de réalisation, ces évidements présentent en vue de dessus une forme globalement semi-circulaire.

Le paquet 36 de tôles est formé d'un empilement axial de tôles qui s'étendent dans un plan radial perpendiculaire à l'axe B de l'arbre 35. Le paquet 36 de tôles forme le corps du rotor 30 et est en matière ferromagnétique. Ce paquet 36 de tôles comporte ici une âme centrale cylindrique et des pôles 44 saillants radialement à partir de l'âme. Ces pôles 44 sont dans un mode de réalisation d'un seul tenant avec l'âme. En variante les pôles 44 sont rapportés sur l'âme, par exemple par une liaison du type tenons-mortaises comme décrit dans le document FR 2 856 532. Un pôle 44 sur deux ou tous les pôles 44 sont rapportés sur l'âme de manière à faciliter le montage et le démontage des pôles 44. En variante, un retour 45 saillant d'un pôle 44 sur deux ou le retour 45 saillant de tous les pôles 44 est rapporté par rapport à un bras 39 correspondant.

Dans la suite de la description, des faces radiales orientées vers le milieu du paquet 36 de tôles seront qualifiées de faces internes tandis que les faces radiales orientées dans un sens opposé seront qualifiées de faces externes. On considère également que le côté arrière du rotor 30 est situé du côté du résolveur 100 tandis que le côté avant est situé du côté opposé.

Ainsi, le paquet 36 de tôles est délimité axialement par la première face 40 radiale externe d'extrémité avant et par la deuxième face 41 radiale externe opposée d'extrémité arrière.

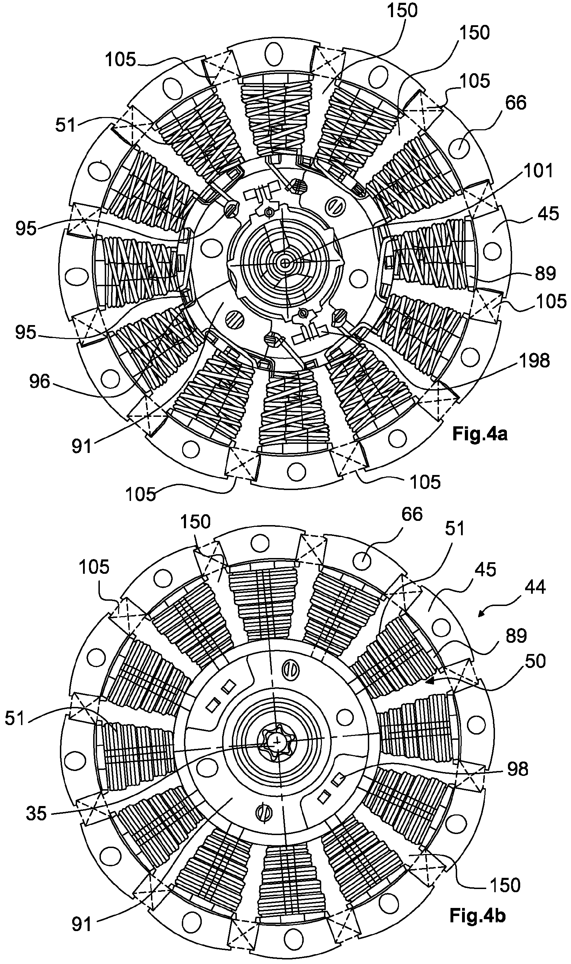

Dans un plan radial, les tôles du paquet 36 de tôles ont toutes un contour identique. Le contour des tôles est découpé de forme globalement circulaire et comporte les pôles 44 saillants, qui sont répartis régulièrement selon une direction radiale et saillants de l'arbre 35 vers la périphérie externe, comme illustré aux Figures 4a-4b. Le paquet 36 de tôles comporte au moins deux pôles 44 et dans l'exemple représenté aux figures, il comporte douze pôles 44.

Chaque pôle 44, comme mieux visible à la Figure 7, est constitué d'un bras 39 et d'un retour 45 saillant. Le bras 39 s'étend radialement depuis l'âme vers la périphérie extérieure en direction du stator 12. L'extrémité libre du pôle 44 se termine par le retour 45 saillant circonférentiellement de part et d'autre du bras 39. Un entrefer annulaire existe entre l'extrémité libre des pôles 44 et la périphérie intérieure du corps du stator 12.

La fonction du retour 45 saillant de chaque pôle 44 est de retenir dans la direction radiale un bobinage 50 d'excitation électriquement conducteur, qui est enroulé autour du bras 39 radial de chaque pôle 44 comme cela est décrit ci-dessous, à l'encontre de la force centrifuge subie par le bobinage 50 d'excitation lors de la rotation du rotor 30.

Les bobinages 50 d'excitation de chaque pôle 44 sont reliés électriquement entre eux par des fils de liaison, par exemple en série en variante en parallèle. Les fils de liaison et des bobinages 50 pourront être des fils en cuivre recouverts d'émail. Ces bobinages 50 d'excitation sont alimentés électriquement par un collecteur 101, qui comporte des bagues collectrices 102, qui sont agencées autour d'une extrémité arrière de l'arbre 35. Ce collecteur 101 est par exemple réalisé par surmoulage de matière électriquement isolante sur des éléments électriquement conducteurs (non visibles) reliant les bagues 102 à un anneau (non référencé) relié électriquement par des liaisons filaires aux extrémités du ou des bobinages 50 d'excitation du rotor 30.

Les bagues collectrices 102 sont alimentées électriquement par l'intermédiaire de balais (non représentés) qui appartiennent à un porte-balais et qui sont disposés de façon à frotter sur les bagues collectrices 102. Le porte-balais est généralement agencé dans le carter 11 et il est relié électriquement à un régulateur de tension (cf. Figure 1).

Avantageusement, pour augmentation de la puissance de la machine 10 électrique, le rotor 30 comporte en outre des aimants référencés 105 sur les Figures 4a-4b suivant un nombre égal au nombre de pôles (en l'occurrence douze). Les aimants 105 s'étendent axialement au voisinage de la périphérie externe du rotor 30. Ainsi les aimants 105 sont agencés régulièrement autour de l'arbre 35 en alternance avec les pôles 44. A cet effet, chaque aimant 105 est positionné entre deux pôles 44 saillants adjacents, les extrémités libres des deux pôles 44 saillants étant munies d'encoches maintenant l'aimant 105 de manière immobile entre les deux pôles. Une même encoche peut contenir un seul ou une pluralité d'aimants 105, par exemple deux aimants 105 dont un en terre rare et un en ferrite.

Le rotor 30 comporte au moins deux pôles 44 diamétralement opposés. Aux Figures 4a-4b il est prévu une alternance circonférentielle de douze pôles 44 et de douze aimants 105. Le nombre de pôles 44 et le nombre d'aimant 105 sont variables suivant l'application. On peut prévoir un mode de réalisation sans aimants 105. Dans un autre mode de réalisation le nombre d'aimants 105 est inférieur au nombre de pôles 44 comme visible à la Figure 7. Toutes ces dispositions permettent d'augmenter à volonté la puissance de la machine 10. Par simplicité, à titre non limitatif, on supposera dans la suite qu'il est prévu douze pôles 44 diamétralement opposés, douze bobinages 50 et douze aimants 105. Les pôles 44 et les aimants 105 sont répartis ici circonférentiellement de manière régulière.

Plus précisément dans les Figures 4a-4b les aimants 105 sont montés entre les retours saillants 45 de deux pôles saillants 44, lesdits retours 45 présentant des encoches sous la forme de rainures à profil en forme de U, comme décrit par exemple dans le document FR 2 784 248. Le montage des aimants 105 dans au moins une rainure pourra donc être réalisé à l'aide d'une lame et interposition d'une colle plus souple que l'aimant 105. En variante les aimants 105 sont montés dans les rainures à l'aide de ressorts.

D'une manière générale un faible jeu, appelé entrefer, existe entre la périphérie externe des pôles 44 et la périphérie interne du corps du stator 12.

Le rotor 30 comporte en outre un dispositif 80 d'isolation électrique des bobinages 50 par rapport au paquet de tôles 36. Ce dispositif 80 comporte deux éléments 81, 82 électriquement isolants. Le premier élément 81 isolant, dit élément 81 avant, est positionné contre la face 40 radiale externe du paquet 36 de tôles, tandis que le deuxième élément 82 isolant, dit élément 82 arrière, est positionné contre la face 41 radiale externe du paquet 36 de tôles. Ces éléments 81, 82 isolants assurent l'isolation électrique des chignons 51 des bobinages 50. Le dispositif 80 d'isolation de bobinages comporte en outre des isolants 83 d'encoche assurant l'isolation électrique des parties axiales des bobinages 50.

Plus précisément, chaque élément 81, 82 isolant comporte une paroi 85 radiale centrale munie d'une ouverture 86 principale autorisant le passage de l'arbre 35. Chaque élément 81, 82 comporte des bras 88 s'étendant radialement à partir du bord externe de la paroi 85 radiale vers l'extérieur de chaque élément 81, 82. Chacun de ces bras 88 comporte à son extrémité libre une casquette 89 s'étendant circonférentiellement de part et d'autre du bras 88. La casquette 89 s'étend également axialement en direction opposée au paquet de tôles 36 et ce à la périphérie interne des retours 45.

Les bras 88 des éléments 81, 82 isolants présentent de préférence, sur leur face externe, des rainures assurant un maintien radial des spires des bobinages 50. Les rainures des bras 88 de l'élément 81 isolant avant sont inclinées afin de faciliter le changement de rang lors de l'opération de bobinage consistant à enrouler un fil conducteur autour des différents pôles pour obtenir les bobinages 50.

Des pions 95 de guidage sont positionnés sur une face externe de la paroi 85 radiale de l'élément 82. Ces pions 95 qui présentent des faces latérales sur lesquelles les fils prennent appui permettent ainsi de guider les fils lors de l'opération de bobinage des pôles 44. Ces pions 95 permettent également de maintenir en position les fils des bobinages 50 dans une position fixe une fois l'opération de bobinage terminée. Ces pions 95 de guidage sont répartis sur la face externe de la paroi 85 radiale de manière adaptée à la configuration de bobinage souhaitée.

Chaque paroi 85 radiale comporte en outre deux parties 91 évidées destinées à recevoir des secteurs internes 79 d'un des flasques 55, 56 de maintien. Pour l'élément 82 isolant arrière, les parties 91 évidées sont diamétralement opposées. Bien entendu, le nombre et la forme des parties 91 évidées, en particulier l'angle d'ouverture et l'écart annulaire entre deux parties 91 évidées, pourront être adaptés en fonction du nombre et de la forme des secteurs 79 correspondants. Pour l'élément 81 isolant avant, les parties 91 évidées et l'ouverture 86 principale sont reliées entre elles, les parois internes délimitant l'orifice étant destinées à prendre appui localement sur la circonférence externe de l'arbre 35.

L'élément isolant 82 arrière comporte un rebord 96 annulaire délimitant l'ouverture 86 principale. Ce rebord 96 annulaire s'étend axialement depuis la face externe de l'élément 82 isolant vers l'extérieur du rotor 30. Lorsque le rotor 30 est monté, le rebord 96 est situé entre le colleteur 101 et un épaulement de l'arbre 35 du rotor 30.

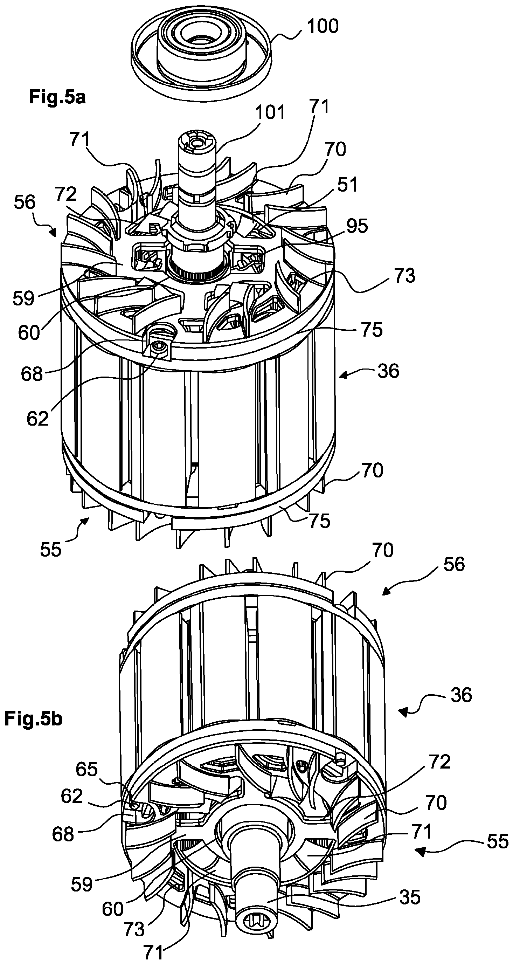

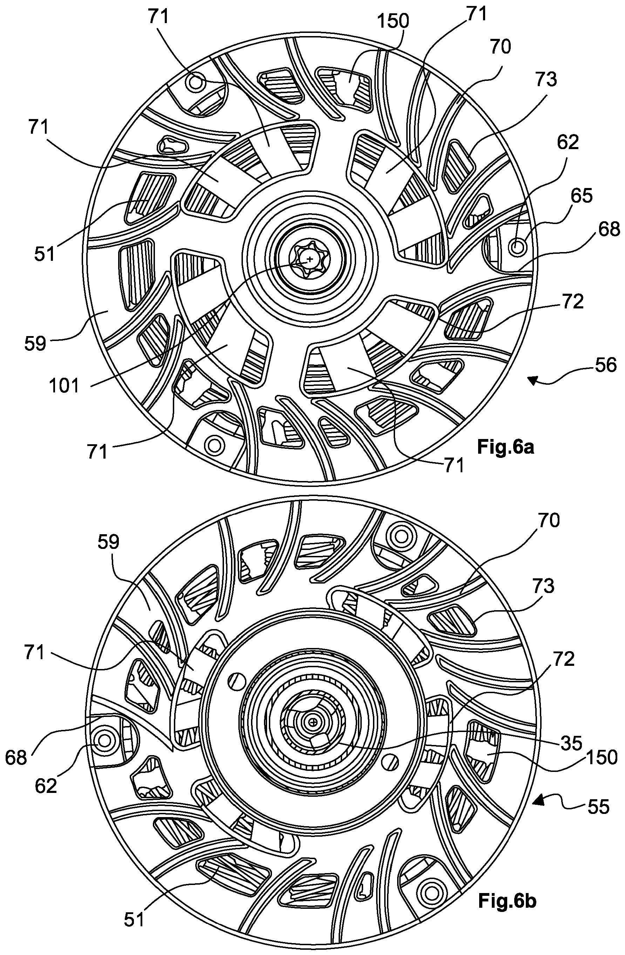

Les éléments 81, 82 isolants comportent chacun deux dispositifs 98 d'encliquetage (de clipsage) destinés à coopérer par encliquetage (clipsage) avec des ouvertures correspondantes ménagées sur chaque face d'extrémité radiale de l'âme du paquet 36 de tôles (cf. Figures 5a-5b, 6a-6b).

Les isolants 83 d'encoche prennent la forme d'une membrane fine, réalisée dans un matériau électriquement isolant et conducteur de chaleur, par exemple un matériau aramide de type dit Nomex (marque déposée), cette membrane fine étant pliée de manière que chaque isolant 83 d'encoche est plaqué contre les parois internes axiales du paquet 36 de tôles entre deux pôles 44 adjacents. A cet effet, l'isolant 83 d'encoche présente cinq parties 110-114, chaque partie 110-114 étant pliée par rapport à une partie adjacente suivant un segment de pliage sensiblement parallèle à l'axe B du rotor 30. Une première partie 110 située vers le centre du rotor 30 est plaquée contre une partie de la circonférence externe de l'âme située entre deux pôles 44 adjacents. Deux parties 111, 112 en regard une de l'autre sont plaquées contre deux faces tournées l'une vers l'autre des bras 39 des pôles 44. Deux parties 113, 114 sont plaquées contre deux portions de deux retours 45 saillants adjacents. Le nombre d'isolants 83 d'encoche dépend du nombre de pôles 44, auquel il est égal. Ici, le nombre d'isolants 83 d'encoche est de douze.

Chaque bobinage 50 d'excitation comporte des spires enroulées autour du bras 39 d'orientation radiale de chaque pôle 44 recouvert d'isolants 83 d'encoche et des deux bras 88 des éléments 81, 82 isolants situés chacun à une extrémité de ce pôle 44, de manière que les chignons 51 du bobinage 50 d'excitation font saillie axialement par rapport à chaque face 40, 41 d'extrémité radiale externe du paquet 36 de tôles, comme représenté aux Figures 3a-3b. Plus particulièrement, la face radiale externe de chaque chignon 51 est décalée axialement vers l'extérieur par rapport à la face 40, 41 radiale externe associée du paquet 36 de tôles. Chaque pôle 44 comporte ainsi un bobinage 50 d'excitation qui comporte lui-même deux chignons 51 opposés. Comme mieux visibles dans les figures 4a, 4b un espace 150, sous la forme d'une fente, existe entre deux bobinages consécutifs 50 enroulés chacun autour de deux bras 39 appartenant à deux pôles 44 consécutifs. Un passage d'air axial existe ainsi entre deux pôles 44 et deux bobinages 50 consécutifs. Ces passages s'étendent axialement d'une face radiale 40 à l'autre 41 et sont délimités d'une part, radialement par l'âme 43 et par les rebords 45 et d'autre part latéralement par deux bobinages 50 consécutifs.

Un premier flasque 55 de maintien du paquet de tôle 36, dit flasque avant 55, et un deuxième flasque 56 de maintien du paquet de tôles 36, dit flasque arrière 56, sont montés coaxialement à l'arbre de manière à enserrer axialement le paquet de tôles 36 pour maintenir les tôles empilées en paquet et pour maintenir les isolants 81, 82 de manière décrite ci-après. Chaque flasque a globalement la forme d'un disque s'étendant dans un plan radial perpendiculaire à l'axe de l'arbre. Chaque flasque comporte un orifice central pour le montage coaxial sur l'arbre. Les flasques sont en matériau amagnétique. Dans ce mode de réalisation les flasques 55, 56 sont métalliques pour mieux évacuer la chaleur. Ils pourront être en Aluminium, en laiton ou à base de manganèse. Les flasques 55, 56 sont de forme creuse et présentent à leur périphérie externe un rebord annulaire 75 interrompu localement par lamages 68 de passage de tirants 62 en matériau amagnétique décrit ci-après.

Suivant ce bobinage, chaque chignon 51 est en appui contre la face de la casquette 89 tournée vers le chignon 51. La casquette 89 est maintenue immobile par rapport au pôle 44 grâce au bras 88 associé plaqué entre une face radiale du pôle 44 et les fils des bobinages. La casquette 89 en combinaison avec le rebord 75 du flasque permet ainsi de retenir les chignons 51 malgré la force centrifuge provoquée par la rotation du rotor 30 s'exerçant sur lesdits chignons 51.

Chaque flasque 55, 56 comporte une paroi 59 radiale s'étendant dans un plan radial perpendiculaire à l'axe B de l'arbre 35. Cette paroi 59 radiale est munie d'une ouverture 60 principale autorisant le passage de l'arbre 35. Le flasque 56 arrière comporte deux évidements 61 diamétralement opposés débouchant vers l'ouverture 60. Ces évidements 61 de forme sensiblement carrée vue du dessus permettent le passage chacun d'une patte (Dont l'une est référencée en 198 à la Figure 4a) du collecteur 101 du type de celui décrit dans le document FR 2 710 197 auquel on se reportera. Dans cette Figure 4a les pattes 198 ne sont pas encore rabattues pour serrer les extrémités des fils des bobinages 50. On notera que quatre des pions 95 internes d'extrémités sont décalés radialement par rapport aux autres pions 95 pour un montage en parallèles des bobinages 50. Plus précisément deux pions internes d'extrémité 95 sont disposés de part et d'autre de chaque patte 198. Dans cette Figure 4a on a coupé pour plus de clarté les extrémités des fils de liaison entre les bobinages 50. Ces extrémités sont enroulés autour des pions internes 95 et destinées à être fixés par sertissage dans les pattes 198. Les pions 95 ont une section de forme rectangulaire à coins chanfreinés pour ne pas blesser les portions de fils de liaison entre deux bobinages 50 consécutifs. Comme visible dans cette Figure 4a les autres pions 95 sont implantés globalement sur la même circonférence et les extrémités de chaque bobinage 50 sont en contact avec les bords latéraux concernés de deux pions 95 consécutifs pour une liaison en continu des bobinages 50. Les bords longitudinaux inférieurs des pions 95 de guidage retiennent radialement le fil de liaison entre deux bobinages 50 consécutifs. Le montage a ainsi une bonne tenue malgré l'action de la force centrifuge. Bien entendu lorsque les bobinages 50 sont montés en série deux pions inférieurs 95 suffisent.

On appréciera que la solution précitée à pions 95 assure la continuité entre les différents bobinages 50, qui sont tous au même potentiel. Les bobinages 50 peuvent être réalisées à l'aide d'une aiguille centralement creuse pour passage du fil et qui se déplace circonférentiellement, axialement et radialement. Cette aiguille bascule pour passer d'un pion 95 à un autre. Bien entendu en variante on peut supprimer les pions 95 internes et fixer directement les extrémités des fils sur les pattes 198.

La paroi 59 radiale de chaque flasque 55, 56 présente un rebord 75 annulaire s'étendant à la périphérie externe de la paroi 59 radiale et s'étendant axialement en direction du centre du rotor 30. Ce rebord 75 annulaire présente une face en appui sur les faces d'extrémité radiale externe des pôles 44 constituées par les retours et donc sur la face d'extrémité radiale 40, 41 concernée du paquet de tôles, de sorte que les casquettes 89 des éléments 81,82 isolants sont prises en sandwich radialement entre une face annulaire interne du rebord 75 et les chignons 51. Une telle configuration permet aux flasques 55, 56 de participer avec les casquettes 89 au maintien radial des chignons 51 malgré la force centrifuge provoquée par la rotation du rotor 30. Dans une variante, il serait également possible de faire appel uniquement au rebord 75 annulaire des flasques 55, 56 pour maintenir radialement les chignons 51 en position. Dans ce cas les éléments 51, 52 isolants sont donc dépourvus de casquettes 89. En variantes les éléments 81, 82 et l'isolant 83 sont remplacés par un isolant monobloc enfilé sur les bras 39. Dans ce cas on fait appel à une solution à bras et/ou pôles 44 rapportés du type de celle décrite dans le document FR 2 856 532 précité.

La face externe de la paroi 59 de chaque flasque 55, 56 comporte d'un seul tenant des pales 70 centrifuges formant un ventilateur assurant une circulation centrifuge du flux d'air dans le rotor 30. Chaque pale 70 centrifuge, légèrement incurvée, s'étend sensiblement perpendiculairement à la paroi 59 radiale vers l'extérieur du rotor 30 depuis la face radiale externe du flasque 55, 56 associé. Avantageusement pour une meilleure évacuation de la chaleur, les pales 70 sont réalisées venues de matière avec le flasque 55, 56 associé. De préférence, les pales 70 sont agencées à la périphérie externe de la face radiale externe du flasque 55, 56 de façon dissymétrique par rapport à l'axe B de l'arbre 35 de manière à produire des turbulences dans l'air environnant lorsque le rotor 30 tourne.

En variante, les pales 70 appartiennent à un ventilateur séparé du flasque 55, 56. L'utilisation de flasques 55, 56 et de ventilateurs séparés permet d'adapter facilement les ventilateurs en fonction de la puissance de la machine 10 ciblée. Le flasque 55, 56 et le ventilateur sont alors fixés entre eux au moyen d'un dispositif de fixation formé par exemple par des éléments de fixation associés aux flasques 55, 56 coopérant avec des orifices du ventilateur. Cette fixation pourra être réalisée à l'aide de vis comme à la Figure 16 du document US 6 784 586, en variante par rivetage ou soudage par points.

Chaque flasque 55, 56 comporte par ailleurs une première série d'orifices 72 situés autour de l'ouverture 60 principale, ces orifices 72 présentant un angle d'ouverture au moins égal à l'angle entre deux pôles 44 saillants successifs . Ici, cette première série d'orifices 72 comporte quatre orifices 72 présentant le même angle d'ouverture. Chaque orifice 72 est en regard ici de deux espaces 150. Bien entendu, cela dépend des applications. Les quatre orifices 72 du flasque 55 avant sont agencés de manière régulière autour de l'ouverture 60 principale. On notera que les orifices 72 n'ont pas la même taille d'un flasque 55 à l'autre pour créer une dissymétrie favorable pour l'écoulement axial de l'air entre les bobinages 50.

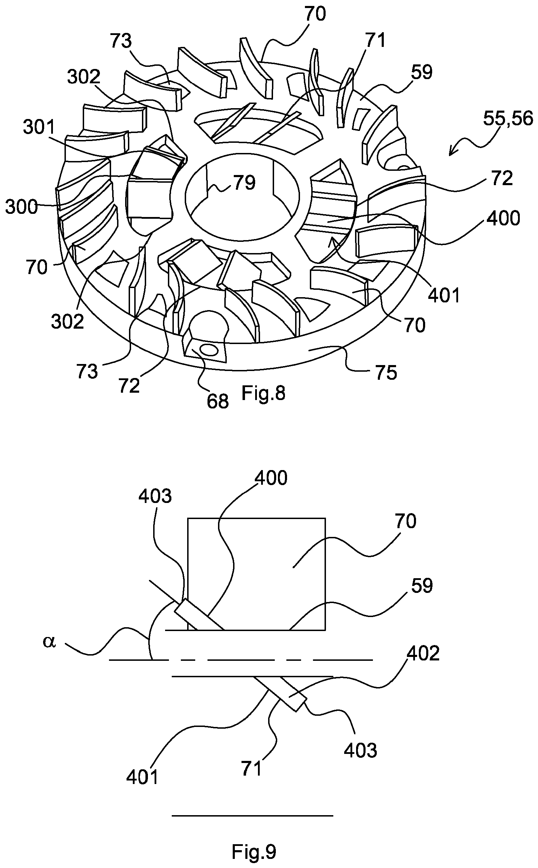

Dans ce mode de réalisation deux pales 71 axiales de ventilation sont associées à chaque orifice 72 afin d'assurer une circulation axiale du flux d'air dans le rotor 30 à la faveur des espaces 150, c'est-à-dire une circulation du flux d'air de l'avant du paquet 36 de tôles à l'arrière du paquet 36 de tôles ou vice-versa selon la dépression existant entre les faces 40, 41. Les pales 71 axiales s'étendent suivant un plan incliné par rapport à la paroi 59 radiale du flasque 55, 56. Chaque pale 71 axiale s'étend de part et d'autre d'un orifice 72 traversant et est positionnée au dessus d'un espace 150 entre deux pôles 44. La hauteur radiale de la pale 71 axiale, est globalement égale à la hauteur radiale de l'orifice 72 déterminée par deux bords arrondis 330, 301, décrits ci après, délimitant l'orifice (cf. Figures 8 et 9).

Plus précisément, chaque pale 71 axiale comporte deux faces 400, 401 opposées ayant les plus grandes surfaces, reliées entre elles par quatre bords latéraux 402, 403. La face 400 est tournée vers l'extérieur du rotor 30 tandis que la face 401 est tournée vers le paquet 36 de tôles. Les deux bords 402 s'étendent sensiblement dans le sens du flux d'air axial et les deux bords 403 relient entre eux les bords 402.

Chaque orifice 72 est délimité par deux bords 300, 301 arrondis opposés et deux bords 302 de liaison reliant les bords 300, 301 arrondis opposés. Les bords 300, 301 s'étendent circonférentiellement, le bord 300 , dit bord externe, étant implanté sur une circonférence de diamètre supérieur à l'autre bord 301, dit bord interne. Les bords 302 sont des bords latéraux qui délimitent latéralement les orifices 72. Dans ce mode de réalisation les bords 302 sont globalement d'orientation radiale. Une portion d'au moins un bord 402 latéral de la pale 71 axiale de ventilation s'étendant sensiblement dans le sens du flux d'air axial est reliée à un bord 300, 301 arrondi de l'orifice 72.

Dans un mode de réalisation préféré de l'invention, une portion du premier bord 402 latéral de chaque pale 71 est reliée au premier bord 300 arrondi de l'orifice 72 associé à ladite pale 71 et une portion du deuxième bord 402 latéral opposé au premier bord 402 latéral est reliée au deuxième bord 301 arrondi dudit orifice 72.

Dans un exemple, chaque pale 71 axiale de ventilation présente un angle α compris entre 10 degrés et 45 degrés par rapport à la paroi 59 radiale du flasque 55, 56 (cf. Figure 9).

En variante, le nombre de pales 71 axiales associées à chaque orifice 72 est différent de deux. Ainsi dans un autre mode de réalisation une seule pale 71 est associée à chaque orifice 72. Dans encore un autre mode de réalisation trois pales 71 sont associées à chaque orifice 72. Ainsi qu'on l'aura compris le nombre de pales dépend de l'étendue circonférentielle des orifices et donc du nombre d'orifices 72. En variante le nombre des pales 71 est différent d'un orifice à l'autre. De même en variante l'un des flasques 55, 56 est dépourvu de pales 71.

Dans un mode de réalisation, en vue de dessus, certaines au moins des pales 70 centrifuges s'étendent au moins en partie sur l'orifice 72 traversant afin d'assurer avec les pales 71 axiales une circulation axiale du flux d'air dans le rotor 30 à travers les espaces 150.

Chaque flasque 55, 56 comporte en outre une deuxième série d'orifices 73, chaque orifice 73 de la deuxième série étant positionné entre deux pales 70 successives . Ces orifices 73 sont en regard d'au moins une partie d'un espace 150 et sont implantés au voisinage des rebords 45 à la périphérie interne de ceux-ci pour un passage axial de l'air entre les faces 40, 41. Il est possible de ménager de tels orifices 73 dans toutes les zones séparant deux pales 70 successives ou uniquement dans certaines de ces zones en fonction du circuit de ventilation souhaité. Ces orifices 73 présentent un angle d'ouverture plus petit que l'angle d'ouverture des orifices 72 de la première série d'orifices 72. Ici, les deuxièmes séries d'orifices 73 comportent quatorze orifices 73 de taille inégale. En variante il est prévu des lamages supplémentaires à l'image des lamages 68 décrits ci après. Ces lamages affectent radialement la périphérie externe de la paroi radiale 59 et axialement une partie du rebord 75. Ces lamages pourront être implantés au niveau des espaces libres entre deux retours 45. Bien entendu on peut supprimer des orifices 73 et remplacer ceux-ci par des lamages. Tout dépend des applications. La deuxième série d'orifices 73 pourra ne pas avoir la même taille d'un flasque à l'autre.

On notera, comme visible dans les Figures 4a et 4b, que la largeur des chignons 51 et des bobinages 50 est décroissante par couche en allant radialement de la périphérie externe à la périphérie interne du chignon 51. Il en résulte la présence d'un espace 150 globalement de largeur constante définissant un passage axial traversant (non référencé) entre deux bobinages 50 successifs. Les orifices 72 sont en vis-à-vis d'au moins la périphérie interne d'un espace 150 et d'un passage entre deux bobinages successifs comme visible dans les Figures 6a et 6b. Les orifices 72 du flasque 56 sont plus larges circonférentiellement et radialement que ceux du flasque 55. Les orifices 73 sont implantés radialement à l'extérieur des orifices 72, c'est-à-dire sur une circonférence moyenne supérieure à celle des premiers orifices, et ce, d'une part, au voisinage de la périphérie externe d'au moins un espace 150 et d'autre part, dans les zones libres entre deux pales 70 agencée de manière dissymétrique pour réduire les bruits. Il est réalisé ainsi une dissymétrie entre les deux flasques 55, 56 permettant une circulation axiale de l'air non perturbée par la présence éventuelle des aimants 105 implantés à la périphérie externe du paquet de tôles 36 entre deux retours 45 implantés à l'extérieur des fentes.

L'invention tire partie de la présence des espaces 150 et donc des passages axiaux traversant entre deux bobinages 50 en vis à vis pour implanter les orifices 72, 73 et les pales 71.

Lorsque le rotor 30 tourne, les pales 70 et les deux séries d'orifices 72, 73 ainsi que les lamages permettent ainsi d'évacuer la chaleur emmagasinée notamment par circulation d'air à l'intérieur de la machine 10. Suivant le circuit de ventilation, l'air issu de l'extérieur du rotor 30 va pénétrer à l'intérieur du rotor 30 par les orifices 72, 73 d'un flasque 55, 56 pour s'écouler ensuite le long du rotor 30 à l'intérieur des espaces 150 entre deux pôles 44 successifs pour ensuite ressortir du côté opposé via les orifices 72, 73 du flasque 55, 56 opposé. Les flasques 55, 56 constituent ainsi des ventilateurs internes. Le nombre d'orifices 72, 73, et de lamages leurs dimensions, le nombre de pales 70, ainsi que leur agencement, pourront être adaptés en fonction du circuit de ventilation souhaité tout en conservant la résistance mécanique des flasques 55, 56. Le sens axial de la circulation de l'air à travers les espaces 150 dépend de la dépression existant entre les faces 40, 41 sachant que dans un mode de réalisation l'un des chignons 51 peut être plus long axialement que l'autre et que les pales 70 peuvent avoir une taille différente d'un flasque à l'autre.

La paroi 59 radiale de chaque flasque 55, 56 présente en outre sur sa face interne tournée vers le paquet 36 de tôles deux secteurs internes 79 s'étendant axialement vers le paquet 36 de tôles. Chaque secteur 79 est inséré dans une partie 91 évidée d'une paroi 85 radiale d'un élément 81, 82 isolant. Dans un exemple ces secteurs 79 sont constitués par deux portions diamétralement opposées d'un même anneau. Les secteurs 79 constituent des butées axiales pour l'âme du paquet de tôles 36.

Le rebord 75 annulaire de chaque flasque 55, 56 comporte au moins deux pions 77 de centrage destiné à coopérer avec une ouverture 66 axiale ménagée dans un pôle 44 saillant. Les pions 77 sont de forme cylindrique de forme complémentaire aux ouvertures 66 ici de forme cylindrique.

Dans un mode de réalisation on augmente le nombre de pions 77 de l'un au moins des flasques 55, 56, qui est alors métallique pour créer un pion 77 de centrage et d'évacuation de chaleur positionné de manière à coopérer avec une ouverture 66 axiale ménagée dans le paquet 36 de tôles, ce pion 77 de centrage et d'évacuation de chaleur étant apte à évacuer la chaleur du paquet 36 de tôles vers le flasque 55, 56. Ce pion 77 est alors avantageusement monté à serrage dans l'ouverture 66 et s'étend donc axialement en direction du paquet de tôles 36. Ce pion 77 est en forme de tige et est plus long axialement qu'un pion de centrage 77 précité. Par exemple s'agissant d'un paquet de tôles de 70 mm de longueur et de diamètre de 110 mm ce pion supplémentaire pourra avoir une longueur axiale de 30 à 35 mm. Le nombre de pions supplémentaire 77 de centrage et d'évacuation de la chaleur dépend des applications. Un même flasque 55, 56 pourra être doté d'au moins deux pions 77 d'évacuation de le chaleur de longueur axiale différente pour mieux évacuer les calories aux endroits les plus chaux ou de deux pions d'évacuation de la chaleur de même longueur. Les deux flasques pourront être doté chacun d'au moins un pion d'évacuation de la chaleur. Le nombre de pions d'évacuation de la chaleur pourra être différent d'un flasque à l'autre en fonction des calories à évacuer. En variante un seul des flasques pourra être pourvu d'au moins un pion d'évacuation de la chaleur. Ce ou ses pions d'évacuation de la chaleur 77 permettent en combinaison avec le ou les pales 71 de mieux évacuer la chaleur.

Dans un mode de réalisation les flasques 55, 56 en matériau amagnétique sont réalisés en matière moulable tel que de l'aluminium pour bien évacuer la chaleur ou en variante en matière plastique avantageusement renforcée par des fibres pour obtention par moulage des pales 70. Dans un autre mode de réalisation les flasques en matériau amagnétique sont métalliques en étant en laiton ou à base de manganèse. En variante l'un des flasques est en matière plastique avantageusement renforcé par des fibres et l'autre flasque métallique en étant par exemple en aluminium. On peut réaliser l'équilibrage du flasque en matière plastique par apport de matière dans au moins une saillie axiale du flasque comme décrit dans le document DE 23 46 345 auquel on se reportera. Dans encore un autre mode de réalisation les deux flasques 55, 56 sont métalliques, l'un étant en aluminium, l'autre en laiton. L'équilibrage de l'un au moins des flasques est réalisé en variante par sertissage d'au moins une masse d'équilibrage à dans l'un des évidements réalisés dans des saillies de ce flasque comme décrit dans le document DE 30 31 622 auquel on se reportera pour plus de précisions. Bien entendu l'équilibrage est réalisé dans un mode de réalisation par perçage comme décrit dans le document WO 2007/00385 précité.

Les pions 77 permettent de faciliter le positionnement angulaire des flasques 55, 56 lors du montage. Les flasques 55, 56 sont fixés l'un à l'autre par des tirants 62 d'orientation axiale, qui sont ici au nombre de trois. A cet effet chaque flasque 55, 56 comporte trois orifices 65 destinés à permettre le passage de chaque tirant 62. Les tirants 62 traversent axialement, via les ouvertures 66 axiales ménagées dans les pôles, le paquet 36 de tôles depuis le flasque 55 avant jusqu'au flasque 56 arrière. Ces tirants 62 sont en matériau amagnétique, par exemple en Aluminium ou en inox.

La face radiale externe de chaque flasque 55, 56 comporte des lamages 68 pour loger les extrémités de chaque tirant 62. Ces lamages 68 autorisent un passage de l'air et affectent les rebords annulaires 75 des flasques 55, 56.

Selon une variante non représentée de l'invention, les flasques comportent d'autres moyens de refroidissement tels qu'au moins un caloduc implanté au niveau d'un retour 45. Ce caloduc pourra être implanté à la faveur d'un orifice 65 libre. L'arbre peut être un arbre conformé pour constituer un caloduc.

Selon un autre aspect les orifices 65 de fixation du flasque 55 avant sont taraudés. Les tirants 62 comportent une extrémité filetée qui est vissée dans les orifices taraudés du flasque 55 avant lors du montage du rotor 30. En variante l'extrémité filetée du tirant 62 est autotaraudeuse en sorte que l'orifice 65 associé du flasque 55 est lisse. En variante, l'extrémité du tirant 62 est lisse et traverse l'orifice 65 associé du flasque 55, l'extrémité libre du tirant 62 étant écrasée au contact de la face externe du flasque 55 pour une fixation par rivetage. En variante, le tirant 62 est remplacé par une tige traversant les orifices 65 des flasques 55, 56 et du paquet 36 de tôles, les extrémités axiales de la tige étant écrasées au contact des faces externes des flasques 55, 56 pour une fixation par rivetage.

Le rotor 30 comporte un résolveur 100 permettant de connaître la position en rotation du rotor 30. Le résolveur 100 intervient notamment lorsque la machine 10 fonctionne en mode moteur (fonction démarreur), afin de pouvoir adapter convenablement la tension appliquée aux bobinages 50 du stator 12 en fonction de la position du rotor 30. Dans un exemple le résolveur 100 est remplacé par une cible magnétique associée à un ensemble de capteurs à effet Hall porté par un porte- capteur.

Plus précisément, le flasque arrière 56 est configuré pour porter un porte-cible qui est destiné à permettre à des capteurs associés de détecter la position angulaire du rotor 30. Les capteurs sont portés par un porte-capteurs dont la position est réglable circonférentiellement. La lecture de la cible est ici radiale. Le porte-cible avec sa cible et les capteurs solidaires d'un porte capteur appartiennent à des moyens de suivi de la rotation du rotor comme décrit dans le document WO01/69762 auquel on se reportera pour plus de précisions

On décrit ci-après le montage du rotor 30. Les isolants 83 d'encoche sont chacun installés entre deux pôles 44 successifs. Ensuite, les éléments 81, 82 isolants sont fixés sur le paquet 36 de tôle par encliquetage (clipsage) via les deux dispositifs 98. Chaque face d'extrémité radiale externe de chaque pôle 44 est alors en contact direct avec un bras 88 d'un élément 81, 82 isolant.

Les bobinages 50 d'excitation sont ensuite enroulés autour de chaque pôle 44 recouvert d'isolants 83 d'encoche et des deux bras 88 des éléments 81, 82 isolants associés à ce pôle 44, les fils des bobinages 50 étant guidés et maintenus par les rainures des bras 88 et par les pions 95 de guidage des éléments 81, 82 isolants.

Le paquet 36 de tôles, les éléments 81, 82 isolants et les bobinages 50 d'excitation associés sont montés sur l'arbre 35 de rotor 30, par exemple par emmanchement à force. Puis les flasques 55, 56 sont agencés axialement de part et d'autre du paquet 36 de tôles de manière que les pions 77 de centrage entrent dans des ouvertures 66 axiales ménagées dans les pôles 44 saillants et que les secteurs 79 sont positionnés à l'intérieur des parties 91 évidées des parois 85 des éléments 81, 82 isolants. Le collecteur 101 est positionné sur l'arbre 35, entre le deuxième flasque 56 et le deuxième élément 82 isolant.

Les rebords 75 annulaires des flasques 55, 56 présentent alors une face en appui sur les faces d'extrémité radiale externe des pôles 44 de sorte que les casquettes 89 des éléments 81, 82 isolants sont prises en sandwich radialement entre une face annulaire interne du rebord 75 et les chignons 51. Une telle configuration permet aux flasques 55, 56 de participer avec les casquettes 89 au maintien des chignons 51 malgré la force centrifuge provoquée par la rotation du rotor 30.

La tige filetée des tirants 62 est ensuite introduite axialement dans les orifices 65 de fixation du flasque 55 avant. Les tirants 62 sont ensuite vissés dans les orifices 65 de fixation taraudés du flasque 56 arrière jusqu'à ce que la tête de chaque tirant 62 soit en appui au fond du lamage 68 associé du flasque 55 avant. Ainsi les tirants 62 permettent d'enserrer axialement le paquet 36 de tôle et les éléments 81, 82 isolants entre les deux flasques 55, 56.

Puis une opération d'équilibrage des flasques 55, 56 est réalisée. Cette opération consiste par exemple dans le perçage de trous ou d'évidements dans la périphérie de la face externe de la paroi 59 radiale de chaque flasque 55, 56 de manière que le rotor 30 ne vibre pas lorsqu'il est entraîné en rotation. Grâce à l'invention l'opération d'équilibrage est facilitée grâce aux flasques 55, 56 permettant de réduire le nombre d'organes de fixation.

Le résolveur 101 est positionné autour de l'arbre 35, sur la face externe de la paroi 59 radiale du deuxième flasque 56.

Lors du fonctionnement d'un tel rotor 30, les bobinages 50 d'excitation ont tendance à s'échauffer compte tenu du courant qui les parcourt.

Les flasques 55, 56 tournent avec l'arbre 35 du rotor 30. Les pales 70, 71 brassent ainsi de l'air et de l'air circule dans la machine 10. Les pales 70 centrifuges créent un flux d'air centrifuge dans la machine 10 et les pales 71 axiales créent un flux d'air axial circulant entre les deux flasques 55, 56 le long des espaces 150 entre deux pôles adjacents grâce aux deux séries d'orifices 72, 73 de chaque flasque 55, 56. Les pales 70, 71 et les orifices 72, 73 dissipent ainsi dans l'air la chaleur accumulée à l'intérieur du rotor 30. La chaleur est donc évacuée de manière efficace dans l'air environnant par l'intermédiaire des pales 70, 71 et des orifices 72, 73. L'air environnant est renouvelé grâce au brassage et aux turbulences induits par les pales 70, 71.

En variante les pales 70 sont inclinées axialement de manière à créer une composante axiale et radiale pour assurer une circulation de l'air suivant une direction axiale et une direction radiale ou inversement. Dans ce cas les pales 70 ne sont pas perpendiculaires par rapport à la face 59 du flasque 56, 55 mais inclinées.

Ainsi qu'il ressort à l'évidence de la description et des dessins les paquets de tôles du stator 12 et du rotor 30 permettent de diminuer les pertes dues aux courants de Foucault. Les évidements de l'ouverture 38 de la Figure 7 permettent de diminuer les contraintes lors de l'emmanchement à force de l'arbre moleté dans l'orifice central de l'âme du paquet de tôles 36. La solution à pôles 44 d'un seul tenant avec l'âme centrale du paquet de tôles 36 est plus avantageuse qu'une solution à pôles rapportés car cette solution présente une meilleure tenue à la force centrifuge et permet de garantir un plus petit entrefer entre la périphérie externe du rotor 30 et la périphérie interne du corps du stator 12. Les modes de réalisations décrits ci-dessus permettent d'utiliser les collecteurs 101 des alternateurs conventionnels, par exemple du type de ceux décrits dans le document FR 2 710 197 et également les montages conventionnels des aimants de ces alternateurs.

Il ressort également à l'évidence de la description et des dessins que les flasques 55, 56, de forme creuse, présentent un rebord 75 constituant un élément de pression pour maintenir le paquet de tôles 36 et éviter une déformation, notamment une ouverture de celui-ci. Le paquet de tôle 36 est serré entre les flasques 55, 56. Les rebords 75, configurés pour venir en contact avec les retours 45, rigidifient les flasques 55, 56 et constituent via leur périphérie interne une buté radiale pour les casquettes 89 des éléments 81, 82. Ainsi sous l'action de la force centrifuge la périphérie externe des casquettes 89 est admise à coopérer avec la périphérie interne des rebords 75 des flasques 55, 56. Ces flasques 55, 56 constituent par l'intermédiaire de leur rebord 75 une butée axiale pour les aimants 105 implantés entre deux retours consécutifs 45. La forme creuse des flasques 55, 56 permet de loger les chignons 51, les éléments 81, 82 avec leurs casquettes 89 et le collecteur 101. On appréciera que les secteurs internes 79 des flasques 55, 56 évitent une déformation de l'âme du paquet 36 en combinaison avec les parois 85 des éléments 81, 82.

Les éléments 81, 82 sont, de manière précitée, en matière électriquement isolante. Ils pourront être en matière plastique, telle que du PA 6.6. Ils sont plus épais et moins bon conducteur de chaleur que les isolants d'encoche 83.

Bien entendu la présente invention n'est pas limitée aux exemples de réalisation décrits, mais elle est limitée par les revendications ci-dessous.

Ainsi il est possible de prévoir quatre tirants 62 à savoir un trou par tirant 62. En variante il est prévu deux tirants 62 diamétralement opposés et deux caloducs diamétralement opposés, chaque caloduc comportant une tige engagée dans au moins un trou d'un des flasques 55, 56 et au moins dans un tronçon des trous du paquet 36 de tôles et débouchant à l'extérieur du flasque 55, 56 concerné. Ces caloducs peuvent traverser complètement les flasques 55, 56 et le paquet 36 de tôles et être configurés à l'extérieur des flasques 55, 56 pour former des pales 70 de ventilateur. De tels caloducs sont décrits par exemple dans les Figures 11A et 11B du document FR 2 855 673 auquel on se reportera. Les dispositions des Figures 12, 13 et 24 de ce document sont également applicables.

Le nombre de pôles 44 dépend de manière précitée des applications. Ce nombre est égal à 12 dans les figures. En variante il peut être de 8 ou 10. Par rapport au document WO 2007/00385 on augmente dans tous les cas le nombre de bobinages 50 tout en ayant la possibilité d'augmenter le nombre d'aimants 105 à volonté pour augmenter la puissance de la machine 10 électrique tournante à pôles 44 saillants. Ainsi le nombre d'aimants 105 pourra être inférieur au nombre de pôles 44.

Bien entendu on peut remplacer les aimants 105 par des pièces amagnétiques pour avoir une continuité de matière à la périphérie externe du rotor 30. On peut réaliser de nombreuses combinaisons. Ainsi tous les espaces entre les retours 45 pourront être libres. En variante une partie de ces espaces entre les retours 45 pourront être libres et les autres occupés par des aimants 105 et/ou des pièces amagnétiques. En variante les aimants 105 pourront être de nuance différente. Par exemple certains des espaces entre deux retours 45 pourront être occupés par des aimants 105 en ferrite et une partie au moins des autres espaces pourront être occupé par des aimants 105 en terre rare.

Bien entendu en variante l'un au moins des éléments 81, 82 est dépourvu de rainures et l'isolant 83 peut être d'un seul tenant avec l'un des éléments 81, 82, par exemple par moulage. Dans encore une autre variante l'isolant 83 pourra être en deux parties chacune d'un seul tenant avec l'un des éléments 81, 82. L'isolant 83 pourra être donc en variante en PA 6.6 en étant moins épais que les éléments 81, 82.

En variante les flasques 55, 56 sont obtenus par moulage, ou forgeage ou par injection de matière plastique ou de métal.

En variante les pales 70 d'au moins un flasque 55, 56 sont supprimées. Les deux flasques 55, 56 sont en variante dépourvus de pales 70, notamment lorsque la machine 10 électrique tournante est refroidie par eau. Plus précisément en variante la partie intermédiaire du carter 11 comporte un canal pour circulation d'un liquide de refroidissement, tel que le liquide de refroidissement du moteur thermique et le corps du stator 12 est monté par frettage à l'intérieur de la partie intermédiaire.

Bien entendu lorsque les deux flasques 55, 56 ne portent pas de pales 70 on a plus de liberté pour implanter la deuxième série d'ouvertures 73, qui peuvent ainsi être plus larges circonférentiellement pour s'étendre de part et d'autre d'un bobinage 50.

Dans les figures les pales centrifuges de ventilation 70 à action radiale, assurant une circulation de l'air suivant une direction radiale vers le bobinage 13 du stator 12 présentant deux chignons disposés de part et d'autre du corps du stator, les faces radiales et les rebords annulaires externes des paliers 14, 15 étant ajourés, comme dans le document WO 2007/003835, pour passage de l'air. Ces pales 70 ont une forme courbée et sont perpendiculaire à la face 59 du flasque 55, 56 concerné. En variante certaines au moins des pales centrifuges de ventilation 70 sont inclinées axialement de manière à créer une composante axiale et radiale pour assurer une circulation de l'air suivant une direction axiale à travers les espaces 150 et une direction radiale ou inversement. Dans ce cas lesdites pales 70 ne sont pas perpendiculaires par rapport à la face 59 du flasque 56, 55 mais inclinées. En variante les pales 71 ont une forme courbe comme celle des pales 70.

Dans un mode de réalisation au moins l'une des séries d'orifices 72, 73 et /ou de lamages est différente d'un flaque 55, 56 à l'autre. Ainsi en se reportant aux figures 6a et 6b on voit que les ouvertures 72 du flasque 56 ont une plus grande taille que les ouvertures 72 du flasque 55. il en résulte que les pales 71 du flasque 56 sont plus hautes que celles du flasque 55.

Bien entendu en variante les séries d'orifices 72, 73 et/ou de lamages sont identiques d'un flasque 55, 56 à l'autre.

En variante le carter 11 comporte un palier avant et un palier arrière comme divulgué par exemple à la Figure 14 du document US 6 784 586 dans le document montrant une partie des balais et du pont redresseur de courant.

La machine 10 électrique tournante est en variante un alternateur dépourvu de résolveur 100 ou de tout autre moyen de suivi de la rotation du rotor 30.

Les pales 71 axiales créent un flux d'air axial entre les pôles 44 du paquet 36 de tôle afin de refroidir la machine 10. Ainsi, le refroidissement du rotor 30 est amélioré. En effet, l'invention augmente les performances aérauliques intrinsèques des flasques 55, 56 et permet une meilleure évacuation des pertes au niveau du rotor 30 par conduction thermique.

Ainsi qu'il ressort de la description et des dessins, suivant une caractéristique, les rebords 75 des flasques 55, 56 sont configurés afin de maintenir en place les chignons 51 malgré la force centrifuge provoquée par la rotation du rotor 30 s'exerçant sur lesdits chignons 51. Les rebords 75 coiffent les chignons 51 et dans les figures les flasques 55, 56 sont équipés de deux séries de pales 70, 71 de type différent, implantées sur des circonférences médianes de diamètre différent.

Ainsi qu'il ressort également de la description et des dessins de nombreuses combinaisons sont possibles. Ainsi selon une réalisation chaque flasque de maintien 55, 56 est doté d'une pale axiale de ventilation 71. Selon une réalisation un seul des flasque 55, 56 est doté d'au moins une pale axiale de ventilation 71. Selon une réalisation un seul des orifices 72 d'un flasque 55, 56 est doté d'une pale axiale de ventilation 71. Selon une réalisation au moins un orifice 72 d'un flasque 55, 56 comporte au moins deux pales axiales de ventilation 71. Selon une réalisation le nombre de pales axiales de ventilation 71 est différent d'un orifice 72 à l'autre d'un même flasque 55, 56.

## Revendications

1. Ensemble de flasques (55, 56) de maintien d'un paquet (36) de tôles et de chignons (51) de bobinages (50) agencés axialement de part et d'autre du paquet (36) de tôles d'un rotor (30) de machine électrique tournante pour enserrer axialement le paquet de tôles, chaque flasque (55, 56) de maintien comportant une paroi (59) radiale munie d'une ouverture (60) principale autorisant le passage d'un arbre (35) du rotor (30),
**caractérisé en ce que** chaque flasque (55, 56) comporte un rebord (75) annulaire s'étendant à la périphérie externe de la paroi (59) radiale et s'étendant axialement en direction du rotor (30), ce rebord (75) annulaire présentant une face en appui sur la face d'extrémité radiale externe concernée du paquet (36) de tôles et **en ce qu'**au moins un flasque (55, 56) de maintien comporte en outre au moins une pale (71) axiale de ventilation associée à un orifice (72) traversant ménagé dans la paroi (59) radiale, cette pale (71) axiale de ventilation étant destinée à assurer une circulation axiale du flux d'air dans le rotor (30), et étant positionnée en regard d'un espace (150) délimité par deux bobinages consécutifs (50).

2. Ensemble de flasques selon la revendication 1, **caractérisé en ce que** la pale (71) axiale de ventilation s'étend suivant un plan incliné par rapport à la paroi (59) radiale du flasque (55, 56).

3. Ensemble de flasques selon la revendication 2, **caractérisé en ce que** la pale (71) axiale de ventilation présente un angle (a) compris entre 10 degrés et 45 degrés par rapport à la paroi (59) radiale du flasque (55, 56).

4. Ensemble de flasques selon l'une des revendications 1 à 3, **caractérisé en ce que** la pale (71) axiale de ventilation s'étend de part et d'autre de l'orifice (72) traversant.

5. Ensemble de flasques selon l'une des revendications 1 à 4, **caractérisé en ce que** chaque flasque (55, 56) comporte une première série d'orifices (72) situés autour de l'ouverture (60) principale, ces orifices (72) présentant un angle d'ouverture au moins égal à l'angle entre deux pôles (44) saillants successifs.

6. Ensemble de flasques selon la revendication 5, **caractérisé en ce que** la première série d'orifices (72) de chaque flasque (55, 56) comporte quatre orifices (72) et chaque flasque (55, 56) comporte huit pales (71) axiales de ventilation, deux pales (71) axiales de ventilation étant positionnées en travers de chaque orifice (72) traversant.

7. Ensemble de flasques selon l'une des revendications 1 à 6, **caractérisé en ce que** l'un au moins des flasques (55, 56) porte des pales (70) centrifuges de ventilation assurant une circulation de l'air suivant au moins une direction radiale.

8. Ensemble de flasques selon la revendication 7, **caractérisé en ce que** les pales (70) centrifuges de ventilation appartiennent à un ventilateur séparé rapporté à fixation sur le flasque (55, 56) par exemple par soudage par points, vissage ou rivetage.

9. Ensemble de flasques selon la revendication 8, **caractérisé en ce que** les pales (70) centrifuges de ventilation appartiennent au flasque (55, 56) en étant d'un seul tenant avec ce flasque (55, 56).

10. Ensemble de flasques selon l'une des revendications 7 à 9, **caractérisé en ce qu'**au moins une pale (70) centrifuge de ventilation s'étend au moins en partie sur l'orifice (72) traversant en vue de dessus.

11. Ensemble de flasques selon l'une des revendications 5 à 10, **caractérisé en ce que** chaque flasque (55, 56) présente une deuxième série d'orifices (73) à l'extérieur de la première série d'orifices (72).

12. Ensemble de flasques selon la revendication 7 prise en combinaison avec la revendication 11, **caractérisé en ce que** chaque orifice (73) de la deuxième série est positionné entre deux pales (70) centrifuges successives.

## Patentansprüche

1. Anordnung von Endkappen (55, 56) zum Halten eines Pakets (36) aus Blechen und von Köpfen (51) mit Wicklungen (50), die axial auf beiden Seiten des Blechpakets (36) eines Rotors (30) einer elektrischen Drehmaschine angeordnet sind, um das Blechpaket axial zu umschließen, wobei jede haltende Endkappe (55, 56) eine radiale Wand (59) umfasst, die mit einer Hauptöffnung (60) versehen ist, welche den Durchgang einer Welle (35) des Rotors (30) ermöglicht,
**dadurch gekennzeichnet, dass** jede Endkappe (55, 56) einen ringförmigen Rand (75) umfasst, der sich am Außenumfang der radialen Wand (59) erstreckt und sich axial in Richtung des Rotors (30) erstreckt, wobei dieser ringförmige Rand (75) eine Fläche aufweist, die an der jeweiligen äußeren radialen Endfläche des Blechpakets (36) anliegt, und dass mindestens eine haltende Endkappe (55, 56) ferner mindestens eine axiale Lüfterschaufel (71) umfasst, die mit einer Durchgangsöffnung (72), die in der radialen Wand (59) eingerichtet ist, assoziiert ist, wobei diese axiale Lüfterschaufel (71) dazu bestimmt ist, eine axiale Zirkulation der Luftströmung in dem Rotor (30) sicherzustellen, und gegenüber einem Raum (150) positioniert ist, der durch zwei nebeneinander liegende Wicklungen (50) begrenzt wird.

2. Anordnung von Endkappen nach Anspruch 1, **dadurch gekennzeichnet, dass** sich die axiale Lüfterschaufel (71) in Bezug auf die radiale Wand (59) der Endkappe (55, 56) gemäß einer geneigten Ebene erstreckt.

3. Anordnung von Endkappen nach Anspruch 2, **dadurch gekennzeichnet, dass** die axiale Lüfterschaufel (71) einen Winkel (α) aufweist, der in Bezug auf die radiale Wand (59) der Endkappe (55, 56) zwischen 10 Grad und 45 Grad beträgt.

4. Anordnung von Endkappen nach einem der Ansprüche 1 bis 3, **dadurch gekennzeichnet, dass** sich die axiale Lüfterschaufel (71) auf beiden Seiten der Durchgangsöffnung (72) erstreckt.

5. Anordnung von Endkappen nach einem der Ansprüche 1 bis 4, **dadurch gekennzeichnet, dass** jede Endkappe (55, 56) eine erste Serie von Öffnungen (72) umfasst, die um die Hauptöffnung (60) herum liegen, wobei diese Öffnungen (72) einen Öffnungswinkel aufweisen, der mindestens gleich dem Winkel zwischen zwei aufeinander folgenden ausgeprägten Polen (44) ist.

6. Anordnung von Endkappen nach Anspruch 5, **dadurch gekennzeichnet, dass** die erste Serie von Öffnungen (72) jeder Endkappe (55, 56) vier Öffnungen (72) umfasst und jede Endkappe (55, 56) acht axiale Lüfterschaufeln (71) umfasst, wobei zwei axiale Lüfterschaufeln (71) quer zu jeder Durchgangsöffnung (72) positioniert sind.

7. Anordnung von Endkappen nach einem der Ansprüche 1 bis 6, **dadurch gekennzeichnet, dass** mindestens eine der Endkappen (55, 56) zentrifugale Lüfterschaufeln (70) trägt, die eine Zirkulation der Luft gemäß mindestens einer radialen Richtung sicherstellen.

8. Anordnung von Endkappen nach Anspruch 7, **dadurch gekennzeichnet, dass** die zentrifugalen Lüfterschaufeln (70) zu einem separaten Lüfter gehören, der durch Befestigung, beispielsweise durch Punktschweißen, Verschrauben oder Vernieten, an der Endkappe (55, 56) angebracht ist.

9. Anordnung von Endkappen nach Anspruch 8, **dadurch gekennzeichnet, dass** die zentrifugalen Lüfterschaufeln (70) zu der Endkappe (55, 56) gehören und mit dieser Endkappe (55, 56) einstückig ausgebildet sind.

10. Anordnung von Endkappen nach einem der Ansprüche 7 bis 9, **dadurch gekennzeichnet, dass** sich mindestens eine zentrifugale Lüfterschaufel (70) von oben gesehen mindestens teilweise über die Durchgangsöffnung (72) erstreckt.

11. Anordnung von Endkappen nach einem der Ansprüche 5 bis 10, **dadurch gekennzeichnet, dass** jede Endkappe (55, 56) eine zweite Serie von Öffnungen (73) auf der Außenseite der ersten Serie von Öffnungen (72) aufweist.

12. Anordnung von Endkappen nach Anspruch 7 in Kombination mit Anspruch 11, **dadurch gekennzeichnet, dass** jede Öffnung (73) der zweiten Serie zwischen zwei aufeinander folgenden zentrifugalen Schaufeln (70) positioniert ist.

## Claims

1. Set of end shields (55, 56) for holding a stack (36) of laminations and of overhangs (51) of windings (50) arranged axially on either side of the stack (36) of laminations of a rotor (30) of a rotary electric machine for axially clamping the stack of laminations, each holding end shield (55, 56) comprising a radial wall (59) provided with a main opening (60) through which a shaft (35) of the rotor (30) can pass,
**characterized in that** each end shield (55, 56) comprises an annular rim (75) extending at the outer periphery of the radial wall (59) and extending axially towards the rotor (30), this annular rim (75) having a face bearing against the corresponding outer radial end face of the stack (36) of laminations, and **in that** at least one holding end shield (55, 56) further comprises at least one axial ventilation blade (71) associated with a through-orifice (72) created in the radial wall (59), this axial ventilation blade (71) being intended to bring about axial circulation of the flow of air in the rotor (30), and being positioned facing a space (150) bounded by two consecutive windings (50).

2. Set of end shields according to Claim 1, **characterized in that** the axial ventilation blade (71) extends in a plane that is inclined relative to the radial wall (59) of the end shield (55, 56).

3. Set of end shields according to Claim 2, **characterized in that** the axial ventilation blade (71) is at an angle (a) of between 10 degrees and 45 degrees relative to the radial wall (59) of the end shield (55, 56) .

4. Set of end shields according to one of Claims 1 to 3, **characterized in that** the axial ventilation blade (71) extends on either side of the through-orifice (72).

5. Set of end shields according to one of Claims 1 to 4, **characterized in that** each end shield (55, 56) comprises a first row of orifices (72) positioned around the main opening (60), these orifices (72) having an opening angle at least equal to the angle between two successive salient poles (44).

6. Set of end shields according to Claim 5, **characterized in that** the first row of orifices (72) of each end shield (55, 56) comprises four orifices (72) and each end shield (55, 56) comprises eight axial ventilation blades (71), two axial ventilation blades (71) being positioned across each through-orifice (72).

7. Set of end shields according to one of Claims 1 to 6, **characterized in that** at least one of the end shields (55, 56) bears centrifugal ventilation blades (70) that bring about circulation of the air in at least one radial direction.

8. Set of end shields according to Claim 7, **characterized in that** the centrifugal ventilation blades (70) belong to a separate fan that is secured to the end shield (55, 56), for example by spot welding, screwing or riveting.

9. Set of end shields according to Claim 8, **characterized in that** the centrifugal ventilation blades (70) belong to the end shield (55, 56), being in one piece with this end shield (55, 56).

10. Set of end shields according to one of Claims 7 to 9, **characterized in that** at least one centrifugal ventilation blade (70) extends at least partially over the through-orifice (72) when seen from above.

11. Set of end shields according to one of Claims 5 to 10, **characterized in that** each end shield (55, 56) has a second row of orifices (73) outside the first row of orifices (72).

12. Set of end shields according to Claim 7 in combination with Claim 11, **characterized in that** each orifice (73) of the second row is positioned between two successive centrifugal blades (70).
